# EUROPÄISCHE PATENTSCHRIFT

(11) **EP 2 913 570 B1**
(45) Veröffentlichungstag und Bekanntmachung des Hinweises auf die Patenterteilung: **25.07.2018**
(21) Anmeldenummer: 15154512.6
(22) Anmeldetag: 10.02.2015
(51) Int. Cl.: F16K 27/00

(54) **Steuerblock für ein Hydrauliksystem eines Flurförderzeugs mit mindestens einem Hydraulikventil**
Control block for a hydraulic system of an industrial truck with at least one hydraulic valve
Bloc de commande pour un système hydraulique d'un chariot de manutention équipé d'au moins une soupape hydraulique

(30) Priorität: 12.02.2014 DE 102014101764
(43) Veröffentlichungstag der Anmeldung: 02.09.2015
(73) Patentinhaber: Jungheinrich Aktiengesellschaft, 22047 Hamburg (DE)
(72) Erfinder: Göpner, Oliver, 23845 Oering (DE)
(74) Vertreter: Hauck Patentanwaltspartnerschaft mbB

(56) Entgegenhaltungen:
- US-A- 5 044 401
- US-A- 5 364 067
- US-A- 6 131 881
- US-A1- 2003 034 070
- US-B1- 8 267 375

## Beschreibung

Die Erfindung bezieht sich auf einen Steuerblock für ein Hydrauliksystem eines Flurförderzeugs mit mindestens einem Hydraulikventil nach Patentanspruch 1.

Es ist allgemein bekannt, bei Hydrauliksystemen, z.B. für Flurförderzeuge, sogenannte Hydraulik- oder Steuerblöcke einzusetzen, über die Leitungen zwischen Komponenten des Hydrauliksystems wahlweise verbindbar sind. Die Hydraulikblöcke werden mit Hydraulikventilen bestückt. Es ist bekannt, die Steckabschnitte der Hydraulikventile über ein Gewinde am Steuerblock zu befestigen. Entweder sind die Gewindeabschnitte am Steckabschnitt und in der Innenwandung einer Aufnah¬mebohrung ausgebildet, oder es erfolgt eine Verschraubung mit Hilfe einer Über-,wurfmutter, die auf dem Steckabschnitt des Ventilkörpers sitzt und mit einem Ge¬winde des Steuerblocks zusammenwirkt. Bei eingeschraubten Ventilen kann es beim Einschrauben zur Beschädigung von Dichtelementen kommen und daraus resultie¬rend zu einer späteren Leckage. Während des Montageprozesses kann beim Anzie¬hen des Ventils nicht das vorgegebene Drehmoment aufgebracht werden. Dieser Fehler wird selbst bei einer späteren Kontrolle nicht sicher erkannt. Dieser Fehler kann jedoch zu späteren Leckagen und zu einem Lösen des Ventils im Betrieb kommen.

Es ist auch bekannt, den Ventilkörper mit Hilfe eines Flansches am Steuerblock zu befestigen, indem durch eine Bohrung des Flansches eine Befestigungsschraube geführt wird, die in eine Gewindebohrung des Steuerblocks eingeschraubt wird.

Aus US 5,364,067 ist eine Bremssteuereinheit bekannt geworden, die ein Steuerventil in einem Gehäuse aufweist. Das Steuerventil wird durch eine nichtgeschraubte Verbindung in der Steuereinheit gehalten. Das Ventil wird dabei über einen Schnappring gehalten, der an einem Rückhalteflansch angeordnet ist.

Der Erfindung liegt die Aufgabe zugrunde, einen Steuerblock für ein Hydrauliksystem eines Flurförderzeugs mit mindestens einem Hydraulikventil zu schaffen, mit dem Leckagen und sich lösende Ventile vermieden werden. Außerdem soll eine einfache Montage und Demontage der Hydraulikventile während der Produktion erreicht werden.

Diese Aufgabe wird durch die Merkmale des Patentanspruchs 1 gelöst.

Gemäß Patentanspruch 1 ist außen am Steckteil des Ventilkörpers oder in der Aufnahmebohrung des Steuerblocks mindestens ein radial bewegliches Verriegelungselement angeordnet, das mit einer Ringnut in der Aufnahmebohrung bzw. einer Ringnut auf der Außenseite des Steckteils verriegelnd zusammenwirkt, wenn das Steckteil in die Aufnahmebohrung eingesteckt wird, wobei Vorspannmittel das Verriegelungselement in der Verriegelungsposition halten. Dem Steckteil bzw. der Aufnahmebohrung ist ein manuell betätigbarer Entriegelungsmechanismus zugeordnet, mit dem das Verriegelungselement mit der Ringnut der Aufnahmebohrung bzw. des Steckteils außer Eingriff bringbar ist. Am Ventilkörper ist ein elastomerer Ring oder Flansch vorgesehen, der beim Einstecken des Steckteils in den Steuerblock durch Anlage am Steuerblock unter Spannung gesetzt wird, um das Ventil lagefest im Steuerblock anzuordnen.

Für die Ausbildung von Verriegelung und Entriegelung des Ventilkörpers am Steuerblock sind mehrere Möglichkeiten denkbar. Eine besteht erfindungsgemäß darin, dass mindestens eine Rastnase radial beweglich im Steckteil gelagert ist und am Ventilkörper im Abstand zum Steckteil mindestens ein vorzugsweise radial bewegliches Betätigungselement gelagert ist, das über eine mechanische Wirkverbindung so mit der Rastnase in Verbindung steht, dass die Rastnase gegen eine Federvorspannung radial nach innen bewegt wird. Vor dem Einstecken des Steckteils des Ventilkörpers wird eventuell durch die Betätigung eines Betätigungselements die Rastnase radial nach innen bewegt, so dass das Steckteil problemlos in die Aufnahmebohrung des Steuerblocks einsteckbar ist. Nach vollständigem Einstecken des Steckteils, das durch einen Flansch am Ventilkörper begrenzt wird, ist die Rastnase mit einer Ringnut in der Aufnahmebohrung ausgerichtet. Danach bewegt sich die Rastnase etwa durch Federspannung radial nach außen in die Ringnut und verriegelt dadurch das Steckteil in der Aufnahmebohrung. Es versteht sich, dass das Steckteil mit Dichtungselementen ausgestattet ist, um eine Leckage zu vermeiden.

Bei einer anderen Ausführungsform ist vorgesehen, dass in einer die Aufnahmebohrung konzentrisch umgebenden Ringbohrung eine manuell betätigbare Verriegelungshülse gelagert ist, die zwischen einer Verriegelungs- und einer Entriegelungsstellung axial bewegbar ist und die von einer Feder in die Verriegelungsstellung vorgespannt ist, in der in der Wandung der Aufnahmebohrung mindestens eine zur Ringbohrung durchgehende radiale Bohrung vorgesehen ist, die eine Verriegelungskugel aufnimmt, die in der Verriegelungsstellung der Verriegelungshülse an einer Bewegung radial nach außen gehindert wird und die Verriegelungshülse eine innere Entlastungsringnut aufweist, in die die Kugel eintreten kann, wenn die Verriegelungshülse in die Entriegelungsstellung bewegt wird.

Nach einer weiteren Lösung der erfindungsgemäßen Aufgabe nach Anspruch 6 ist außen am Steckteil ein ringförmiger Vorsprung angeordnet und in der Aufnahmebohrung ist in einer Ringnut ein geteilter Ring aus federndem Material so angeordnet, dass der geteilte Ring vorübergehend aufgeweitet wird, wenn beim Einstecken des Steckteils der ringförmige Vorsprung durch den geteilten Ring geschoben wird. Die Ringnut in der Aufnahmebohrung ist so beschaffen, dass der geteilte Ring vorübergehend aufgeweitet werden kann, um das Einstecken des Steckteils zu ermöglichen. Dann verengt sich der Ring wieder und verriegelt dadurch das Steckteil im Steuerblock, wodurch ein Herausziehen durch den ringförmigen Vorsprung und den geteilten Ring verhindert wird.

Mit dem erfindungsgemäßen Stecksystem lässt sich eine leckagefreie Verbindung von Hydraulikventilen mit einem Steuerblock oder auch Hydraulikzylinder herstellen. Das Stecksystem ermöglicht eine schnelle und einfache Montage der Ventile in der Produktion. Montagefehler können schnell und sicher erkannt werden. Im Servicefall kann ein defektes Ventil schnell und einfach gewechselt werden, auch an schwer zugänglichen Stellen.

Ausführungsbeispiele der Erfindung sollen nachfolgend anhand von Zeichnungen näher erläutert werden.
- Fig. 1: zeigt in Seitenansicht bzw. im Schnitt einen Steuerblock und ein Hydraulikventil vor dem Einstecken in schematischer Darstellung.
- Fig. 2: zeigt die Anordnung nach Fig. 1 in perspektivischer Ansicht.
- Fig. 3: zeigt einen Schnitt durch ein Hydraulikventil und einen Steuerblock in verriegelter Stellung des Hydraulikventils im Steuerblock.
- Fig. 4: zeigt eine ähnliche Darstellung wie Fig. 3, jedoch in entriegelter Position des Hydraulikventils.
- Fig. 5: zeigt eine ähnliche Darstellung wie Fig. 1, jedoch mit einem anderen Verriegelungsmechanismus.
- Fig. 6: zeigt perspektivisch eine Einzelheit des Steuerblocks nach Fig. 5.
- Fig. 7: zeigt die Teile der Darstellung nach Fig. 5 in perspektivischer Darstellung.

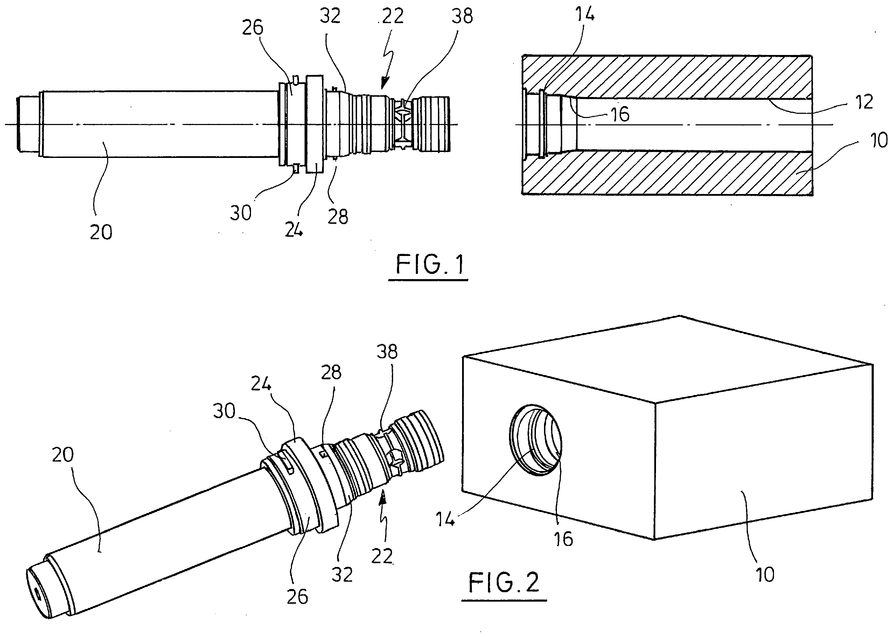

In den Fign. 1 und 2 wird äußerst schematisch ein hydraulischer Steuerblock 10 dargestellt. Er weist eine durchgehende Bohrung 12 auf, die am linken Ende als Aufnahmebohrung ausgebildet ist mit erweitertem Durchmesser und einer Ringnut 14. Ein konischer Bohrungsabschnitt 16 bildet den Übergang von der Bohrung 12 zum hinteren Abschnitt der Aufnahmebohrung. Ein Hydraulikventil in den Fign. 1 und 2 weist einen Ventilkörper 20 auf mit einem Steckteil 22. Auf dem Ventilkörper sitzt ein elastomerer Ring 24, der gegen einen Flansch 26 am Ventilkörper anliegt. Nahe dem elastomeren Ring 24 ist in einem Abschnitt des Steckteils 22 ein Paar Rastnasen 28 angeordnet, die gegen die Vorspannung einer Feder (nicht gezeigt) radial nach innen bewegbar sind. Beim Einstecken des Steckteils 22 werden die Rastnasen nach außen gedrückt bis sie zur Ringnut 14 ausgerichtet sind. Danach greifen sie verriegelnd in die Ringnut 14 ein.

Alternativ können Rastnasen 28 von einem Wirkmechanismus betätigt werden, der von einem Betätigungselement 30 betätigbar ist, das radial im Flansch 26 beweglich gelagert ist. Beim Drücken der beiden Betätigungselemente 30 werden die Rastnasen 28 nach innen bewegt, so dass das Steckteil 22 problemlos gelöst bzw. in die Bohrung 12 eingesteckt werden kann. Der konische Abschnitt 32 am Steckteil 22 kommt dabei in Anlage mit dem konischen Abschnitt 16 der Bohrung 12. In dieser Position sind die Rastnasen 28 zur Ringnut 14 ausgerichtet. Werden die Betätigungselemente entlastet, können die Rastnasen 28 radial nach außen sich bewegen und in die Ringnut 14 eingreifen. Dadurch ist das Steckteil in der Bohrung 12 verriegelnd angeordnet. Beim Einstecken wird der elastomere Ring 24 etwas verformt, so dass eine Vorspannung auf das Steckteil 32 aufgebracht ist, um dieses sicher im Block 10 zu halten.

Wie erkennbar, ist eine Betätigung der Rastnasen beim Einsteckvorgang nicht obligatorisch. Für das Entriegeln der Rastnasen können die Betätigungselemente vorgesehen sein.

Im Steckteil 22 sind mehrere radiale Bohrungen 38 vorgesehen, die mit einer Innenbohrung im Steckteil 22 verbunden ist, um beim Einstecken des Steckteils 22 in den Block 12 eine Fluidkommunikation zu ermöglichen, wenn das Ventil, dessen Einzelheiten nicht näher dargestellt sind, betätigt wird. Zur Betätigung kann z.B. im Ventilkörper 20 ein Kolben vorgesehen werden, der z.B. hydraulisch, pneumatisch, elektromagnetisch oder dergleichen betätigbar ist.

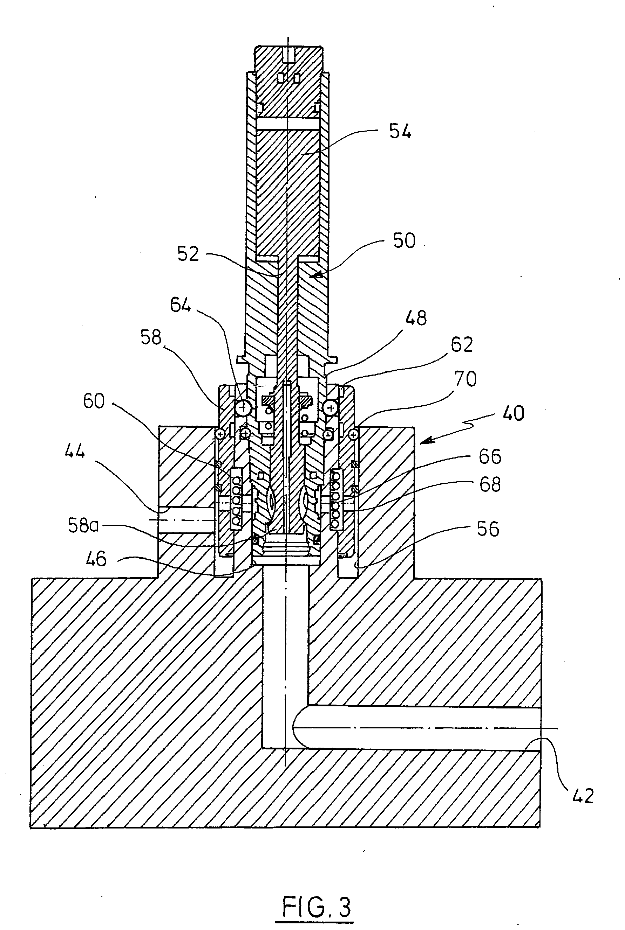

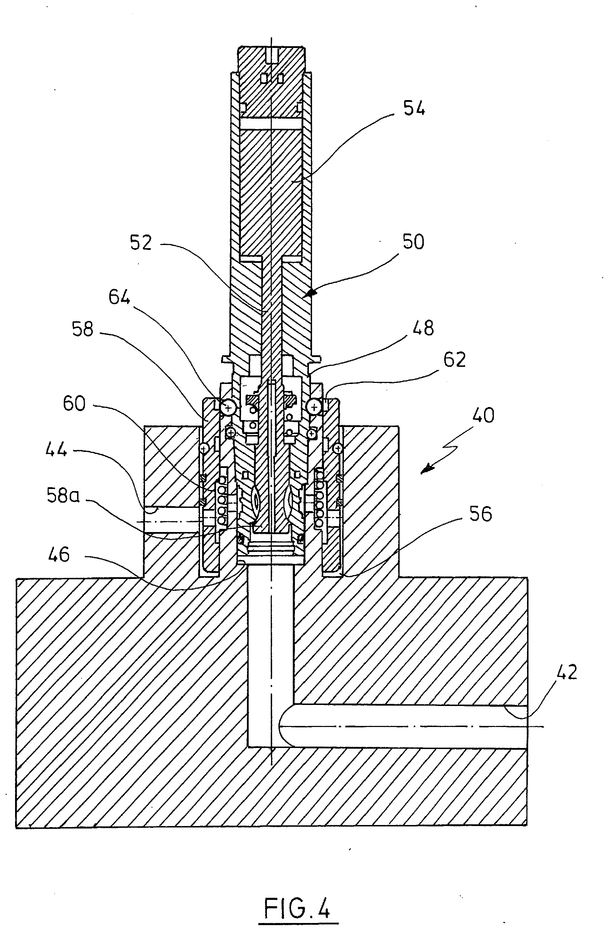

In den Fign. 3 und 4 ist ein Ventilblock oder Steuerblock 40 angedeutet mit einem ersten rechtwinkligen Kanal 42 und einem zweiten Kanal 44, der sich senkrecht zum unteren Abschnitt des rechtwinkligen Kanals 42 erstreckt. Dieser Kanalabschnitt erweitert sich nach links zu einer Aufnahmebohrung 46 für das Steckteil 48 eines Ventilkörpers 50. Im Ventilkörper 50 ist eine Stange 52 axial beweglich gelagert, die am linken Ende mit einem Kolben 54 und am rechten Ende mit einem Ventilelement 58a verbunden ist. Das Ventilelement 58a weist eine axiale Bohrung auf, die in Verbindung mit dem Kanal 42 steht. Das Ventilelement 58a hat nahe dem freien Ende einen konischen Abschnitt, der mit einem konischen Ventilsitz in der inneren Bohrung des Steckteils 48 zusammenwirkt. Diese Teile sind nicht im Einzelnen mit Bezugszeichen versehen, da sie für die Beschreibung der Erfindung nicht von Bedeutung sind. Das Ventilelement oder -glied ist von einer Feder in Schließrichtung vorgespannt, wobei der konische Abschnitt am konischen Ventilsitz anliegt.

Konzentrisch zur Aufnahmebohrung 46 für das Steckteil 48 ist eine Ringbohrung 56 im Ventilblock 40 vorgesehen. Sie nimmt eine Verriegelungshülse 58 auf, die von einer Feder 60 nach außen vorgespannt ist. Am äußeren aus der Ringbohrung vorstehenden Ende weist die Hülse 58 im Inneren eine Entriegelungsnut 62 auf. In der Wandung zwischen Aufnahmebohrung 46 und Ringbohrung 56 sitzen in radialen Bohrungen Verriegelungskugeln 64, die ihrerseits in eine äußere Ringnut des Steckteils 48 eingreifen. In der Position des Steckteils 48 nach Fig. 3 werden die Verriegelungskugeln 64 durch die Innenbohrung der Verriegelungshülse 58 an einer Bewegung radial nach außen gehindert, so dass das Steckteil wirksam in der Aufnahmebohrung 46 verriegelt ist. Wird durch manuelle Betätigung die Verriegelungshülse 58 in die Ringbohrung 46 eingedrückt, kommen die Verriegelungskugeln 64 unterhalb der Nut 62 zu liegen und können daher radial nach außen ausweichen und damit das Herausziehen des Steckteils 48 aus der Aufnahmebohrung 46 ermöglichen. Die Montage des Ventilkörpers 50 verläuft in umgekehrter Weise.

Im Steckteil 48 des Ventilkörpers 50 sind radiale Bohrungen vorgesehen, welche die Innenbohrung des Steckteils 48 mit einer radialen Bohrung 66 verbinden, die ihrerseits zu einer Bohrung 68 in der Verriegelungshülse 58 ausgerichtet ist, um eine Fluidkommunikation zwischen den Kanälen 42 und 44 herzustellen, wenn das Ventilelement 58a in die Öffnungsstellung gebracht wird.

Die Verriegelungshülse 58 ist mit einem Dichtring 70 versehen, damit sie dichtend in der Ringbohrung 56 angeordnet ist. Auf die übrigen Abdichtungen bezüglich der Anordnung des Ventilkörpers 50 im Steuerblock 40 wird nicht weiter eingegangen, da sie konventionell sind.

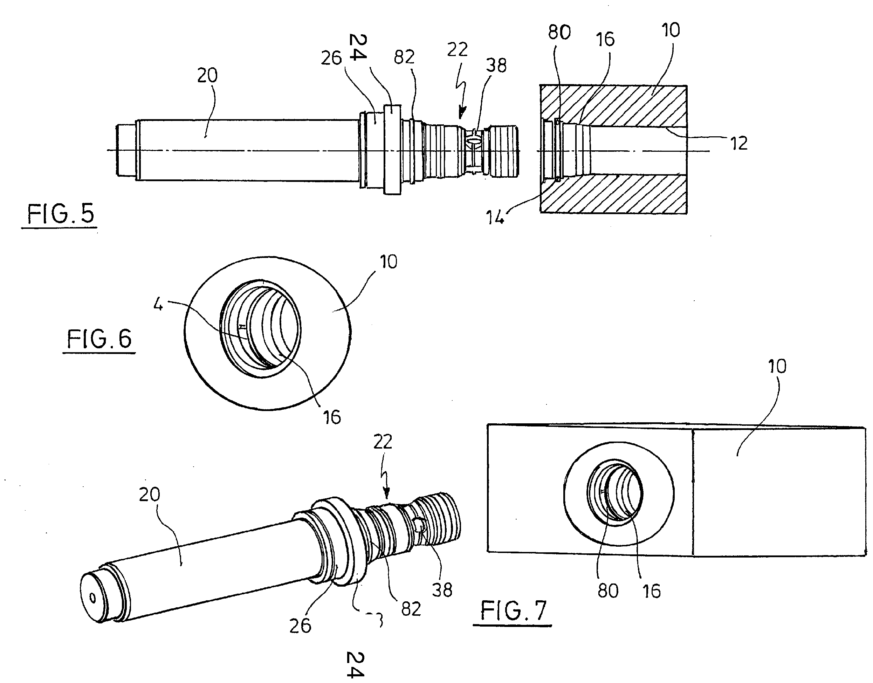

Da der Aufbau der Komponenten nach den Fign. 5 bis 7 dem nach der Ausführungsform nach Fign. 1 und 2 im wesentlichen gleicht, sind gleiche Bezugszeichen gewählt. Es wird darauf verzichtet, den Aufbau bezüglich der Fign. 5 bis 7 noch einmal zu erläutern. Im Unterschied zur Ausführungsform nach den Fign. 1 und 2 ist bei der nach den Fign. 5 bis 7 in der Ringnut 14 ein geteilter Metallring 80 angeordnet. Durch die Teilung ist es dem Ring 80 möglich, sich geringfügig in der Ringnut 14 aufzuweiten. Am Steckteil 22 ist nahe dem elastomeren Ring 28 ein ringförmiger Vorsprung 82 geformt. Dieser hintergreift den geteilten Ring 80, wenn das Steckteil 22 unter Spannung (hervorgerufen durch den elastomeren Ring 28) in die Bohrung 12 eingesteckt wird. Der Ring 82 kann den geteilten Ring 80 passieren, indem dieser sich radial etwas aufweitet. Anschließend zieht sich der geteilte Ring 80 wieder etwas zusammen und bildet damit eine Sperre gegen das Herausziehen des Steckteils 22 aus der Aufnahmebohrung 12.

Auf die Dichtungen am Steckteil 22, welche eine Leckage verhindern, wird nicht weiter eingegangen.

Bezüglich Aufbau und Wirkung des Ventils soll ebenfalls nicht eingegangen werden, da diese konventionell sind.

Während die Ausführungsformen nach den Fign. 1 bis 4 ohne Werkzeug montiert und demontiert werden können, benötigt die Ausführungsform nach den Fign. 5 bis 7 zur Demontage ein Werkzeug.

## Patentansprüche

1. Steuerblock (10) für ein Hydrauliksystem eines Flurförderzeugs mit mindestens einem Hydraulikventil, wobei ein Ventilkörper (20) des Hydraulikventils ein Steckteil (22) aufweist mit mindestens einer radialen Bohrung (38), das in eine Aufnahmebohrung (12) des Steuerblocks (10) einsteckbar ist und wobei Befestigungsmittel vorgesehen sind zur lösbaren Befestigung des Hydraulikventils, wobei außen am Steckteil (22) oder in der Aufnahmebohrung (12) des Steuerblocks (10) mindestens ein radial bewegliches Verriegelungselement (64) angeordnet ist, das mit einer Ringnut (14) verriegelnd zusammenwirkt, wenn das Steckteil (22) in die Aufnahmebohrung (12) eingesteckt ist, wobei Vorspannmittel (60) das Verriegelungselement (64) in der Verriegelungsposition halten und ein Entriegelungsmechanismus vorgesehen ist, mit dem das Verriegelungselement (64) mit der Ringnut (14) außer Eingriff bringbar ist, **dadurch gekennzeichnet, dass** auf dem Steckteil (22) ein elastomerer Ring (24) angeordnet ist, der mit der Außenfläche des Steuerblocks (10), die um die Aufnahmebohrung (12) angeordnet ist, unter Spannung gesetzt wird, wenn das Steckteil (22) verriegelnd in der Aufnahmebohrung (12) sitzt.

2. Steuerblock und Hydraulikventil nach Anspruch 1, **dadurch gekennzeichnet, dass** mindestens eine Rastnase (28) radial beweglich im Steckteil (22) gelagert ist und am Ventilkörper (20) im Abstand zum Steckteil (22) mindestens ein vorzugsweise radial bewegliches Betätigungselement (30) gelagert ist, das über eine mechanische Wirkverbindung so mit der Rastnase (28) in Verbindung steht, dass bei Betätigung des Betätigungselements (30) die Rastnase gegen eine Federvorspannung radial nach innen bewegt wird.

3. Steuerblock und Hydraulikventil nach Anspruch 1, **dadurch gekennzeichnet, dass** eine die Aufnahmebohrung (46) konzentrisch umgebenen Ringbohrung (56) eine manuell betätigbare Verriegelungshülse (58) gelagert ist, die zwischen einer Verriegelungs- und einer Entriegelungsstellung bewegbar ist und die mit einem Abschnitt aus der Ringbohrung (56) heraussteht und die von einer Feder (60) in die Verriegelungsstellung vorgespannt ist, in der Wandung der Aufnahmebohrung (46) mindestens eine zur Ringbohrung (56) durchgehende radiale Bohrung vorgesehen, die eine Verriegelungskugel (64) aufnimmt, die in der Verriegelungsstellung der Verriegelungshülse (58) an einer Bewegung radial nach außen gehindert wird und die Verriegelungshülse (58) eine innere Entlastungsringnut (62) aufweist, in die die Kugel eintreten kann, wenn die Verriegelungshülse in die Entriegelungsstellung bewegt wird, wobei die Verriegelungskugel (64) mit einer äußeren Ringnut des Steckteils (22) in Eingriff gelangt, wenn das Steckteil in die Aufnahmebohrung (46) eingesteckt wird.

4. Steuerblock und Hydraulikventil nach Anspruch 3, **dadurch gekennzeichnet, dass** die Verriegelungshülse (58) abgedichtet in der Ringbohrung (56) angeordnet ist.

5. Steuerblock und Hydraulikventil nach einem der Ansprüche 3 bis 4, **dadurch gekennzeichnet, dass** die Ringbohrung (56) und die Verriegelungshülse (58) jeweils eine radiale Bohrung aufweisen, die die Fluidverbindung zwischen der radialen Bohrung im Steckteil (58) und dem Kanal im Ventilblock (40) herstellen.

6. Steuerblock und Hydraulikventil nach Anspruch 1 **dadurch gekennzeichnet, dass** außen am Steckteil (22) ein ringförmiger Vorsprung (82) angeordnet und in der Aufnahmebohrung (12) in einer Ringnut (14) ein geteilter Ring (80) aus federndem Material derart angeordnet ist, dass der geteilte Ring (80) vorübergehend aufgeweitet wird, wenn beim Einstecken des Steckteils (22) der ringförmige Vorsprung (82) durch den geteilten Ring (80) geschoben wird.

## Claims

1. A control block (10) for a hydraulic system of an industrial truck with at least one hydraulic valve, wherein a valve body (20) of the hydraulic valve comprises a plug-in component (22) having at least one radial bore (38), which can be plugged into a locating bore (12) of the control block (10) and wherein fastening means are provided for detachable attachment of the hydraulic valve, wherein at least one radially movable locking element (64) is arranged at the outside of the plug-in component (22) or within the locating bore (12) of the control block (10), which co-operates lockingly with an annular groove (14) when the plug-in component (22) is plugged into the locating bore (12), wherein preloading means (60) keep the locking element (64) in the locking position and an unlocking mechanism is provided by which the locking element (64) can be set out of engagement with the annular groove (14), **characterised in that** an elastomeric ring is (24) is arranged on the plug-in component (22) and is set under tension with the outer surface of the control block (10) which is arranged around the locating bore (12), when the plug-in component (22) sits lockingly in the locating bore (12).

2. The control block and the hydraulic valve according to claim 1, **characterised in that** at least one lock-in catch (28) is radially movably mounted in the plug-in component (22) and a preferably radially movable actuation element (30) is mounted on the valve body (20) in a distance to the plug-in component (22), which is connected to the lock-in catch (28) via a mechanical operation connection such that upon actuation of the actuation element (30), the lock-in catch is moved radially inward against a spring preload.

3. The control block and the hydraulic valve according to claim 1, **characterised in that** in an annular bore (56) which concentrically surrounds the location bore (46) is mounted a manually operable locking sleeve (58), which can be moved between a locking position and an unlocking position, and which projects out of the annular bore (56) with a segment of it and is preloaded into the locking position by a spring (60), at least one radial bore is provided in the wall of the location bore (46) which penetrates till the annular bore (56) and which accommodates a locking ball (64) which is prevented from movement radially outward in the locking position of the locking sleeve (58) and that the locking sleeve (58) comprises an inner annular groove (62) for unloading, into which the ball can enter when the unlocking sleeve is moved into the unlocking position, wherein the locking ball (64) gets engaged to an outer annular groove of the plug-in component (22) when the plug-in component is plugged into the location bore (46).

4. The control block and the hydraulic valve according to claim 3, **characterised in that** the locking sleeve (58) is sealingly arranged in the annular bore (56).

5. A control block and a hydraulic valve according to one of the claims 3 to 4, **characterised in that** the annular bore (56) and the locking sleeve (58) each have a radial bore which produces the fluid connection between the radial bore in the plug-in component (58) and the channel in the valve block (40).

6. The control block and the hydraulic valve according to claim 1, **characterised in that** an annular projection (82) is arranged on the outside of the plug-in component (22), and a divided ring (80) made of a spring material is arranged in the location bore (12) in an annular groove (14) such that the divided ring (80) is temporarily widened when the annular projection (82) is pushed through the subdivided ring (80) during the plug-in of the plug-in component (22).

## Revendications

1. Bloc de commande (10) pour un système hydraulique d'un chariot de manutention avec au moins une vanne hydraulique, dans laquelle un corps de vanne (20) de la vanne hydraulique comporte un composant enfichable (22) avec au moins un perçage radial (38), qui peut être enfiché dans un trou de positionnement (12) du bloc de commande (10) et dans lequel des moyens de fixation sont prévus pour la fixation amovible de la vanne hydraulique, au moins un élément de fixation (64) radialement mobile est arrangé dans l'extérieur du composant enfichable (22) ou dans le trou de positionnement (12) du bloc de commande (10) et coopère de manière bloquante avec une gorge annulaire (14) quand le composant enfichable (22) est enfiché dans le trou de positionnement (12), dans lequel des moyens de precontraite (60) tiennent l'élément de verrouillage (64) dans la position de verrouillage, et un mécanisme de déverrouillage est prévu par lequel l'élément de verrouillage (64) peut être désengagé de la gorge annulaire (14), **caractérisé en ce que** un anneau en élastomère (24) est arrangé sur le composant enfichable (22) et est mis en tension avec la surface extérieure du bloc de commande (10) qui est arrangée autour du trou de positionnement (12) quand le composant enfichable (22) est debout dans le trou de positionnement (12) de manière bloquante.

2. Bloc de commande et vanne hydraulique selon la revendication 1, **caractérisé en ce que** au moins un bec de blocage (28) est monté de manière radialement mobile dans le composant enfichable (22) et un élément d'actuation (30) de préférence radialement mobile est monté sur le corps de vanne (20) en une distance au composant enfichable (22), qui est relié au bec de blocage (28) via un raccordement actif mécanique, tellement que par l'actuation de l'élément d'actuation (30), le bec de blocage est radialement déplacé vers l'intérieur contre une précontrainte de ressort.

3. Bloc de commande et vanne hydraulique selon la revendication 1, **caractérisé en ce que** dans un perçage annulaire (56) qui entoure le trou de positionnement (46) est arrangé une douille de verrouillage (58) actionnable à main qui peut être déplacée entre une position de verrouillage et une position de déverrouillage, et fait saillie du perçage annulaire (56) avec une part et est précontrainte vers la position de verrouillage par un ressort (60), au moins un perçage radial est prévu dans la paroi du trou de positionnement (46) qui s'étend jusqu'au perçage annulaire et qui héberge une bille de blocage (64) qui est empêchée du mouvement radial vers l'extérieur dans la position de verrouillage de la douille de verrouillage (58), et **en ce que** la douille de verrouillage (58) comporte une gorge annulaire intérieure de décharge (62) dans l'intérieur de laquelle la bille peut entrer quand la douille de verrouillage est déplacée vers la position de déverrouillage, la bille de blocage (64) étant engagée dans une gorge annulaire extérieure du composant enfichable (22) quand le composant enfichable est enfiché dans le trou de positionnement (46).

4. Le bloc de commande et la vanne hydraulique selon la revendication 3, **caractérisé en ce que** la douille de verrouillage (58) est arrangée de manière étanche dans le perçage annulaire (56).

5. Bloc de commande et vanne hydraulique selon l'une quelconque des revendications 3 à 4, **caractérisé en ce que** le perçage annulaire (56) et la douille de verrouillage (58) ont les deux un perçage radial qui fait la connexion fluidique entre le perçage radial dans le composant enfichable (58) et le canal dans le bloc de vanne (40).

6. Bloc de commande et vanne hydraulique selon la revendication 1, **caractérisé en ce que** une saillie annulaire (82) est arrangée sur le coté extérieur du composant enfichable (22), et un anneau divisé (80) fait d'un matériau de élastique est arrangé dans le trou de positionnement (12) dans une gorge annulaire (14) de sorte que l'anneau divisé (80) est temporairement élargie quand la saillie annulaire (82) est poussée à travers l'anneau divisé (80) en enfichant le composant enfichable (22).
